Europäisches Patentamt

(19) European Patent Office  (11) Numéro de publication: **0 018 242**

Office européen des brevets  **B1**

(12) **FASCICULE DE BREVET EUROPEEN**

(45) Date de publication du fascicule du brevet: **31.08.83**  (51) Int. Cl.³: **H 04 L 27/22**

(21) Numéro de dépôt: **80400313.5**

(22) Date de dépôt: **07.03.80**

(54) **Procédé et dispositif de démodulation stochastique pour signaux modulés en sauts de phase, fonctionnant en temps partagé sur plusieurs canaux.**

(30) Priorité: **11.04.79 FR 7909147**

(43) Date de publication de la demande:
**29.10.80 Bulletin 80/22**

(45) Mention de la délivrance du brevet:
**31.08.83 Bulletin 83/35**

(84) Etats contractants désignés:
**BE DE GB**

(56) Documents cités:
**FR - A - 2 337 468**
**US - A - 3 479 457**
**US - A - 3 697 881**
**US - A - 3 956 623**

(73) Titulaire: **THOMSON-CSF TELEPHONE**
**146, Boulevard de Valmy**
**F-92707 Colombes (FR)**

(72) Inventeur: **Houdard, Jean Pierre**
**"THOMSON-CSF"- SCPI 173, bld Haussmann**
**F-75360 Paris Cedex 08 (FR)**
Inventeur: **Julie, Jean-Jacques**
**"THOMSON-CSF"- SCPI 173, bld Haussmann**
**F-75360 Paris Cedex 08 (FR)**
Inventeur: **Leoni, Bernard Georges**
**"THOMSON-CSF"- SCPI 173, bld Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

# Procédé et dispositif de démodulation stochastique pour signaux modulés en sauts de phase, fonctionnant en temps partagé sur plusieurs canaux

La présente invention se rapporte à une procédé de démodulation pour signaux modulés en sauts de phase (ou modulés en phase différentielle), ce procédé permettant le traitement en temps partagé sur plusieurs canaux de transmission, et la présente invention se rapporte également à un démodulateur mettant en oeuvre ce procédé.

On utilise des démodulateurs de type précité pour décoder des informations (appelées par la suite "symboles" et comportant des groupes de deux ou trois éléments binaires dénommés "dibits" ou "tribits") contenues dans un signal modulé en phase différentielle, la modulation étant à 1200 ou 1600 Bauds, correspondant au codage de 2400 ou 4800 éléments binaires par seconde. Ces démodulateurs doivent pouvoir travailler en temps partagé sur plusieurs canaux, par exemple 32 canaux dans le cas où on utilise pour la transmission de ces informations des lignes téléphoniques branchées sur un systèmes MIC.

Ces démodulateurs connus d'échantillonnage à la réception, par ex. du document US A 3 697 881, ne réalisent pas une démodulation correcte dans tous les cas d'utilisation, en particulier lorsque les signaux reçus sont affectés d'un bruit élevé et/ou sont fortement déformés, par exemple à cause d'une forte distorsion provoquée par les lignes de transmission.

La présente invention a pour object un procédé de démodulation du type précité permettant de traiter correctement des signaux affectés d'un bruit élevé et/ou fortement déformés, et la présente invention a également pour objet un démodulateur pour la mise en oeuvre de ce procédé, démodulateur qui soit aussi simple à réaliser que possible et pouvant s'adapter facilement à différentes vitesses de modulation des signaux reçus.

Le procédé de démodulation conforme à la présente invention consiste, à partir de signaux modulés reçus, après une étape habituelle d'échantillonnage et de codage, à fournir des échantillons interpolés de façon à obtenir pour chaque symbole d'information un nombre entier $n$ d'échantillons, à calculer, par rapport à un signal de référence à phase fixe, l'écart de phase de chaque échantillon obtenu après interpolation, à comparer l'écart de phase ainsi calculé de chaque échantillon à l'écart de phase calculée de la même façon pour l'échantillon antérieur de $n$ unités à l'échantillon considéré, à transcoder en "dibits" ou en "tribits" le résultat de la comparaison en assimilant à une même valeur de saut de phase des résultats de comparaison différents mais se situant tous à l'intérieur d'une même fourchette de valeurs, les différentes fourchettes de valeurs pouvant être jointives ou non, à déclencher un compteur dès le franchissement d'un seuil par les résultats de la comparaison, ce seuil correspondant à un nombre déterminé d'échantillons pris dans une série d'échantillons successifs et appartenant tous à la même fourchette de valeurs, et à valider le résultat du transcodage dès que le compteur atteint un état déterminé, le compteur étant remis à zéro chaque fois que le franchissement d'un seuil a été déterminé pour une fourchette de valeurs différente de celle pour laquelle le comptage est en cours.

Selon un autre aspect du procédé de la présente invention, on interpole le signal reçu échantillonné et codé de façon que la nouvelle fréquence d'échantillonnage résultant de l'interpolation soit le plus petit commun multiple de la fréquence d'échantillonnage avant interpolation et de la fréquence de modulation à l'émission. Dans le cas où la fréquence d'échantillonnage est un multiple entier de la fréquence de modulation, le plus petit commun multiple de ces deux fréquences est bien entendu la fréquence d'échantillonnage elle-même, et pour avoir un nombre suffisant d'échantillons par symbole, on interpole de telle façon que la fréquence d'échantillonnage après interpolation soit un multiple entier, avantageusement le triple, de la fréquence d'échantillonnage avant interpolation.

Selon encore en autre aspect du procédé de la présente invention, on génère ledit signal de référence en produisant directement sous forme numérique des valeurs de phase de référence à une fréquence égale à celle de la porteuse des informations transmises.

Le démodulateur pour la mise en oeuvre du procédé conforme à la présente invention est avantageusement prévu pour fonctionner en temps partagé sur plusieurs canaux, et comporte un multiplexeur approprié suivi d'un échantillonneur-codeur habituel à la sortie duquel est branché un interpolateur connu en soi, lui-même suivi d'un calculateur de sauts de phase et d'un dispositif de décision statistique.

Selon un mode de réalisation préféré de l'invention, le calculateur de sauts de phase comporte un circuit de calcul à réseau numérique non récursif et à diviseur pour le calcul de la tangente de l'argument de chaque échantillon incident, ce circuit de calcul étant relié à une première mémoire morte de transcodage dont la sortie est reliée à une premier entrée d'un premier dispositif additionneur dont la seconde entrée est reliée à la sortie d'une seconde mémoire morte commandée par un compteur d'addressage et dans laquelle ont été mémorisées des valeurs de phase de référence à la fréquence de la porteuse des signaux analogiques incidents, la sortie de ce premier dispositif additionneur étant reliée à la fois à une première entrée d'un second dispositif additionneur et à une ligne à retard numérique comportant un nombre d'éléments égal au nombre d'échantillons d'un symbole, la sortie de cette ligne à retard étant reliée à la seconde entrée du second additionneur.

Selon ce même mode de réalisation préféré de l'invention, le dispositif de décision statistique comporte une mémoire morte de décodage sur chacune des différentes sorties de laquelle apparaît un "1" lorsque la phase déterminée par le circuit calculateur se trouve dans la fourchette ou plage d'écarts de phase correspondante, chacune de ces sorties étant reliée d'une part à une mémoire morte de transcodage en "dibits" ou en "tribits", et d'autre part à une ligne à retard numérique comportant un nombre d'éléments supérieur de préférence de deux à trois unités, à la valeur dudit seuil, les différentes sorties des éléments de cette ligne à retard étant reliées aux différentes entrées d'une mémoire morte de probabilité de présence réalisée de façon à produire un "1" à sa sortie lorsque le nombre des éléments de la ligne à retard numérique correspondante comportant des "1" est au moins égal audit seuil, les sorties des différentes mémoires mortes étant à chaque fois reliées d'une part à une première série d'entrées correspondantes d'un comparateur via un premier registre à bascules bistables, et d'autre part à une deuxième série d'entrées de ce comparateur via un second registre à bascules bistables, la sortie de ce comparateur étant reliée d'une part, via un inverseur logique, à l'entrée de signaux d'horloge d'une première bascule bistable qui est reliée à la sortie de ladite mémoire morte de transcodage, et d'autre part à l'entrée de remise à zéro d'un compteur dont les différentes sorties sont reliées à un décodeur, la sortie de ce décodeur étant reliée à l'entrée de signaux d'horloge d'une seconde bascule bistable branchée à la sortie de la première bascule bistable, les sorties de cette seconde bascule bistable constituant les sorties de démodulateur.

La présente invention sera mieux comprise à l'aide de la description détaillée d'un mode de réalisation puis comme exemple non limitatif et illustré par le dessin annexé, sur lequel:

— la figure 1 est un schéma synoptique d'un démodulateur conforme à la présente invention;
— la figure 2 est bloc-diagramme détaillé du calculateur de la figure 1, et
— la figure 3 est un bloc diagramme détaillé du dispositif de décision statistique de la figure 1.

Le démodulateur représenté sur le dessin est destiné à démoduler des signaux modulés en sauts de phase à la fréquence de 1200 Bauds (pour coder 2400 éléments binaires par seconde), et transmis à l'aide d'une fréquence porteuse de 1800 Hz, sur des voies de transmission téléphonique d'un système MIC pour un traitement en temps partagé sur 32 voies. Toutefois, il est bien entendu que ce démodulateur peut traiter des signaux modulés à une autre fréquence, par exemple 4800 ou 9600 éléments binaires par seconde, et transmis sur des fréquences porteuses ayant des valeurs différentes, le décodage pouvant également se faire sur un nombre de voies de transmission différent, et même sur une seule voie, les modifications à réaliser étant évidentes pour l'homme de l'art.

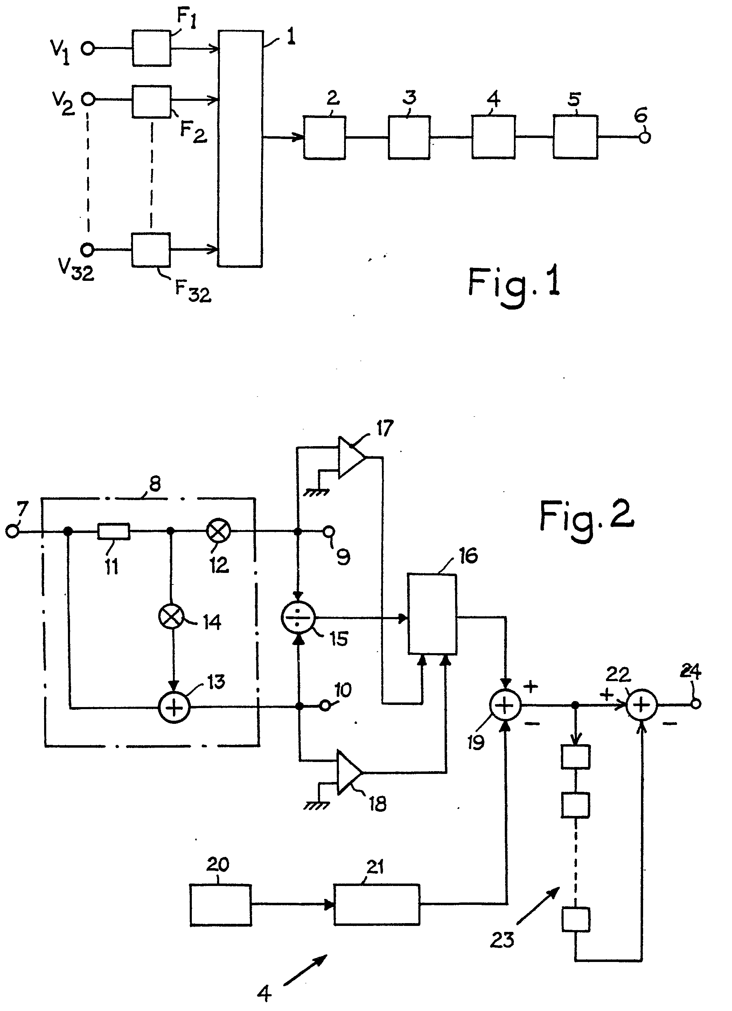

Le démodulateur représenté sur la figure 1 est raccordé à 32 voies de transmission (non représentées) arrivant sur des bornes respectivement référencées $V_1$ à $V_{32}$, chacune de ces bornes étant reliée par l'intermédiaire d'un filtre analogique, respectivement référencé $F_1$ à $F_{32}$, à une entrée d'un multiplexeur 1, les filtres $F_1$ à $F_{32}$ étant des filtres classiques passe-bande. Le multiplexeur 1 est suivi d'un échantillonneur codeur 2 fonctionnant la fréquence de 8 kHz, lui-même suivi d'un interpolateur 3 d'ordre trois faisant passer la fréquences d'échantillonnage à 24 kHz. Toutefois, l'interpolateur 3 peut être d'un ordre différent, mais l'ordre trois a été trouvé optimal.

L'interpolateur 3 est suivi d'un calculateur 4 de sauts de phase instantanés fournissant pour chaque instant d'échantillonnage 1a valeur correspondante du saut de phase du signal incident. Le calculateur 4 est suivi d'un dispositif 5 de décision statistique restituant sur sa sortie 6 les "dibits" ou les "tribits" au rythme de la vitesse de modulation. Les éléments 1 à 3 sont connus en soi et ne seront pas décrits plus en détail. On notera que les éléments 2 à 5 fonctionnent en temps partagé sur 32 voies.

On a représenté sur la figure 2 le bloc-diagramme d'un mode de réalisation préféré du calculateur 4. La borne d'entrée 7 du calculateur 4 est reliée à l'entrée d'un réseau numérique non récursif 8 comportant deux bornes de sortie 9, 10. Entre la borne 7 et la borne 9, le réseau numérique 8 comprend une cellule de retard 11 en série avec un premier multiplicateur 12 par sin $\theta$, et entre les bornes 7 et 10, il comprend un additionneur 13, le point commun à la cellule 11 et au multiplicateur 12 étant relié à l'additionneur 13 par l'intermédiaire d'un second multiplicateur 14 par—cos $\theta$, la signification de $\theta$ étant donnée ci-dessous.

Entre les bornes 9 et 10 on branche un diviseur 15 dont la sortie est reliée à une première entrée d'adresse d'une mémoire morte de transcodage 16. Les bornes 9 et 10 sont également reliées chacune à une première entrée d'un comparateur 17, 18 respectivement, la deuxième entrée de ces comparateurs étant reliée à la masse. Les sorties des comparateurs 17 et 18 sont reliées respectivement à une seconde et à une troisième entrée d'adresse de la mémoire morte 16 dont la sortie est reliée à l'entrée (+) d'un additionneur 19. Un compteur 20, de modulo 40 dans le cas présent, commande l'adressage séquentiel d'une autre mémoire morte 21 dont la sortie est reliée à l'entrée (—) de l'additionneur 19 dont la sortie est reliée à l'entrée (+) d'un autre additionneur 22 ainsi qu'à l'entrée d'une ligne à retard numérique 23 comportant 20 cellules élémentaires dans le cas présent. La sortie de la ligne à retard 23 est reliée à l'entrée (—) de l'additionneur 22 dont la sortie est reliée à une borne 24 constituant la borne de sortie de calculateur 4.

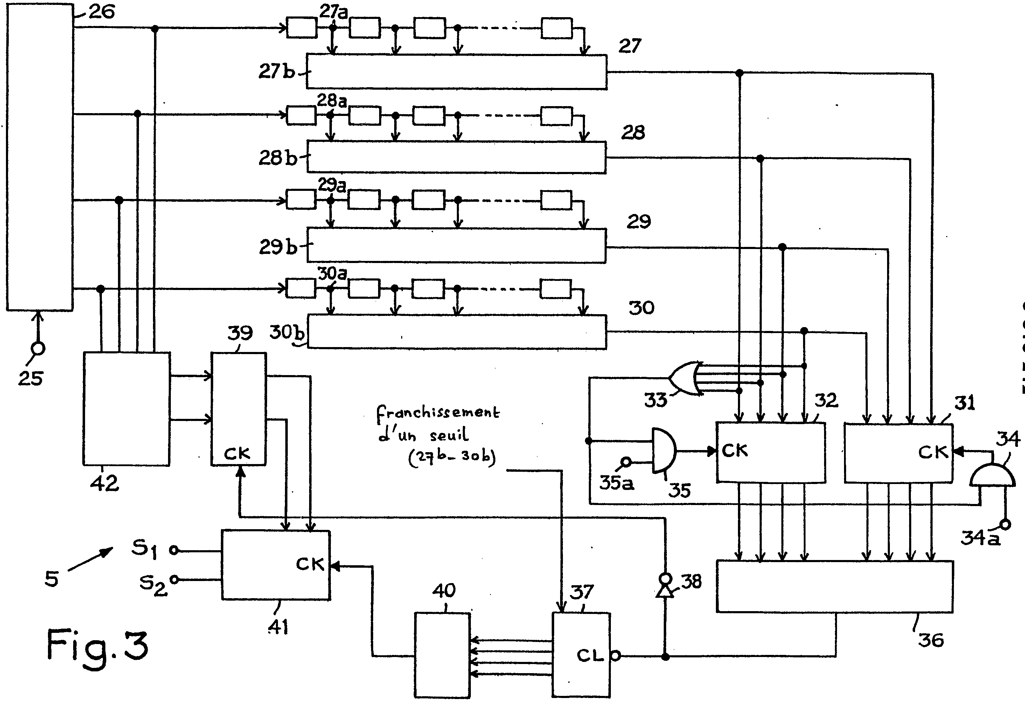

Le dispositif de décision statistique représenté sur la figure 3 est branché, par sa borne d'entrée 25 sur la borne de sortie 24 du calculateur de la figure 2. La borne 25 est reliée à l'entrée d'adressage d'une mémoire morte 26 de décodage comportant autant de sorties qu'il y a de plages de valeurs d'écarts de phase. Dans le cas présent, la mémoire 26 comprend quatre sorties. Chacune des sorties de la mémoire morte 26 est reliée à un dispositif détecteur de probabilité de présence, ces dispositifs détecteurs étant respectivement référencés, 27, 28, 29 et 30, et tous réalisés de la même façon. Chacun des dispositifs détecteurs 27 à 30 se compose d'une ligne à retard numérique (respectivement référencée 27a, 28a, 29a et 30a), comportant dans le cas présent 9, cellules, la sortie de chacune de ces cellules étant reliée à une entrée d'une mémoire morte de probabilité de présence, respectivement référencée 27b, 28b, 29b et 30b, la sortie de la mémoire morte constituant la sortie du dispositif détecteur de probabilité de présence correspondant, chacune des sorties des dispositifs détecteurs 27 à 30 étant reliée à la fois à une entrée correspondante d'une bascule de type D faisant partie d'un premier registre 31, à une entrée correspondante d'une bascule de type D faisant partie d'un second registre référencé 32, et à une entrée correspondante d'une porte OU référencée 33. La sortie de la porte 33 est reliée, via une première porte ET référencée 34, à l'entrée CK de signaux d'horloge du registre 31, et via une deuxieme porte ET référencée 35 à l'entrée CK de signaux d'horloge du registre 32. La deuxième entrée 34a de la porte 34, de même que la deuxième entrée 35a de la porte 35, est reliée à un dispositif générateur séquentiel (non représenté) fournissant des signaux d'horloge de la façon expliquée ci-dessous.

Les différentes sorties des registres 31 et 32, correspondant à leurs différentes entrées sont reliées à un comparateur 36 chargé de comparer les configurations des signaux de sortie de ces deux registres.

La sortie du comparateur 36 est, d'une part, reliée directement à l'entrée CL d'effacement ou remise à zéro d'un compteur 37, et d'autre part, via un inverseur logique 38, à l'entrée CK de signaux d'horloge d'une bascule double 39 de type D, comportant dans le cas présent deux entrées et deux sorties correspondantes. Les sorties du compteur 37 sont reliées à un circuit décodeur 40, chargé de décoder l'état 10 dans le cas présent. La sortie du circuit décodeur 40 est reliée à l'entrée CK de signaux d'horloge d'une autre bascule double 41 de type D dont chacune des deux entrées est reliée à une sortie de la bascule 39, et dont les sorties correspondantes, $S_1$ et $S_2$ constituent les sorties du démodulateur de l'invention, les deux entrées de la bascule 39 étant reliées à des sorties correspondantes d'une mémoire morte 42 de transcodage en "dibits" elle-même reliée aux sorties de la mémoire morte 26.

On va maintenant expliquer le fonctionnement du démodulateur décrit ci-dessous, et en particulier le fonctionnement du calculateur 4 et du démodulateur 5, le fonctionnement des éléments 1 à 3 étant connu en soi.

Etant donné que, comme précisé ci-dessus, on prend en exemple une modulation à 1200 Bauds et que les signaux modulés reçus sont échantillonnés à 8 kHz, on obtient un même nombre d'échantillons pour chaque symbole en interpolant les signaux ainsi échantillonnés de façon que la nouvelle fréquence d'échantillonnage après interpolation soit le plus petit commun multiple de la fréquence d'échantillonnage avant interpolation et de la fréquence de modulation à l'émission, c'est-à-dire que la nouvelle fréquence d'échantillonnage doit être de 24 kHz, l'interpolateur étant d'ordre 3. Ainsi, pour chaque symbole émis, on obtient 20 échantillons à la sortie de l'interpolateur 3. Dans le cas de la modulation à 1 600 Bauds, le plus petit commun multiple serait à 8 kHz, mais on n'aurait pas assez d'échantillons par symbole, et on garde donc 24 kHz, le nombre d'échantillons après interpolation étant de 15 par symbole, ce qui est généralement suffisant.

Les signaux échantillonnés à 24 kHz sont traités par le réseau numérique 8 de la façon suivante. On suppose qu'à un instant $t$ un échantillon $x_n$ se présente à l'entrée du réseau 8. Si l'on ne tient pas compte des distorsions affectant lest échantillons, $x_n$ est de la forme: $x_n = A \sin(n\theta + \phi_k)$, $\phi_k$ étant la phase instantanée de $x_n$, A l'amplitude de l'enveloppe des échantillons, et $\theta = 2\pi f_p Te'$, $f_p$ étant la fréquence de la porteuse et $Te'$ la période d'échantillonnage après interpolation. L'échantillon retardé $x_{n-1}$ dans la cellule 11 s'écrit, en supposant qu'il appartient au même symbole que $x_n : x_{n-1} = A \sin[(n-1)\theta + \phi_k]$. Si l'on appelle $y_{n-1}^1$ le signal à la sortie 10 et $y_{n-1}^2$ le signal à la sortie 9, correspondant à $x_{n-1}$, on trouve:

$$y_{n-1}^1 = x_n - x_{n-1} \cos \theta$$
$$= A \sin(n\theta + \phi_k) - A \sin[(n-1)\theta + \phi_k] \cdot \cos \theta$$
$$= A \sin \theta \cos[(n-1)\theta + \phi_k]$$

et

$$y_{n-1}^2 = x_{n-1} \sin \theta$$
$$= A \sin[(n-1)\theta + \phi_k] \cdot \sin \theta$$

La division réalisée par le diviseur 15 permet d'obtenir:

$$\frac{y_{n-1}^2}{y_{n-1}^1} = tg[(n-)\theta + \phi_k]$$

On notera que dans le cas du codage à 9600 éléments binaires par seconde, on obtient le carré de l'amplitude des échantillons en branchant sur les bornes 9 et 10 des circuits d'élévation au carré suivis d'un additionneur.

D'autre part, les comparateurs 17 et 18 permettent d'obtenir les signes respectifs de $y_{n-1}^2$ et de $y_{n-1}^1$. En mémorisant dans la mémoire morte 16 une table des tangentes, on obtient à sa sortie la valeur de l'argument $(n-1) \theta + \phi_k$ de l'échantillon $x_{n-1}$.

Dans la mémoire morte 21, on mémorise la suite des valeurs de phases instantanées d'une onde de référence pour une fréquence égale à la fréquence de la porteuse, à savoir 1800 Hz dans le cas présent. La suite des valeurs de phases instantanées est de la forme: $n\theta + \phi_0$. En considérant qu'à chaque instant la valeur de l'argument $n\theta + \phi_k$ d'un échantillon du signal reçu et la valeur $n\theta + \phi_0$ de l'argument d'un échantillon de référence se présentent simultanément aux entrées de l'additionneur 19, on obtient à sa sortie la valeur $E_n$ de l'écart instantané entre la phase du symbole analysé et la phase de référence, avec $E_n = \phi_k - \phi_0$. Du fait que l'on a choisi 1800 Hz pour les échantillons de phase de référence et que $\theta$ dépend des fréquences 1800 et 8000 Hz les échantillons de phase de référence doivent avoir une périodicité de 40, c'est-à-dire que le compteur 20 doit être de modulo 40. Lorsque se présente le symbole suivant pour lequel les échantillons sont de la forme générale: $x_m = A \sin (m\theta + \phi_1)$, l'écart instantané $E_m$ entre la phase de référence vaut pour toute valeur de $m$: $E_m = \phi_1 - \phi_0$. Le saut de phase $\Delta\phi_n$ entre deux symboles est donc: $\Delta\phi_n = E_m - E_n = \phi_1 - \phi_k$ en choisissant $m = n+N$, N étant le nombre d'échantillons par symbole, dans le cas présent N=20. Par conséquent, à la sortie de l'additionneur 19, on obtient pour chaque échantillon analysé la valeur $E_n$ ou $E_m$ de l'écart instantané entre sa phase et la phase de référence, et à la sortie 24 de l'additionneur 22, on obtient la valeur $\Delta\phi_n$ du saut de phase entre deux symboles consecutifs, à condition que la ligne à retard 23 comporte N cellules, N étant égal à 20 dans le cas présent.

La valeur de $\Delta\phi_n$ calculée pour chaque échantillon incident par le calculateur 4 est envoyée dans la mémoire morte 26 de décodage fournissant un "1" sur une de ses sorties lorsque le $\Delta\phi_n$ incident se trouve dans la plage d'écarts correspondante et "0" sur les autres sorties, les plages étant avantageusement jointives. Pour chaque échantillon incident, les signaux se présentant sur chacune des sorties de la mémoire 26 sont envoyés dans les lignes à retard numériques ou registres à décalages 27a à 30a où elles progressent de proche en proche à chaque arrivée d'un nouvel échantillon. Dans le cas présent, ces lignes à retard comportent 9 cellules, ce qui signifie qu'à tout moment on peut connaître les valeurs de phase des neuf derniers échantillons. Chacune des mémoires mortes 27b à 30b est réalisée de façon à produire un "1" à sa sortie dès qu'au moins sept des neufs valeurs mémorisées dans la ligne à retard correspondante sont égales à "1". Ainsi, dès qu'au moins sept échantillons parmi neuf échantillons consécutifs ont une phase se trouvant dans la même plage commune, l'une des sorties des mémoires de probabilité de présence est à "1" et toutes les autres sont à "0". Cette configuration des sorties des mémoires se retrouve à l'entrée du OU 33 qui présente donc un "1" à sa sortie. Les registres 31 et 32 ne peuvent transmettre à leurs sorties respectives cette configuration que lorsque des "1" apparaissent sur les bornes 34a et 35a. Un générateur séquentiel (non représenté et réalisé de façon connue en soi) envoie d'abord un "1" sur la borne 35a au bout d'un temps suffisant, après l'arrivée du premier échantillon d'un symbole, pour assurer le décodage et pour permettre au dispositif de détermination de probabilité de présence correspondant d'émettre un "1" à sa sortie. Ensuite a lieu le traitement de comptage et de décision décrit ci-dessous à la fin duquel ledit générateur séquentiel envoie un "1" sur la borne 34a. Pendant ce traitement, la borne 34a est toujours à "0", et la bascule 31 présente donc sur ses sorties la configuration correspondant au symbole précédent. Ainsi, après l'apparition d'un "1" sur la borne 35a, le comparateur 36 peut déterminer si la configuration de sortie du registre 31 est la même ou non que celle du registre 32, le comparateur 36 étant réalisé de façon à présenter un "1" à sa sortie lorsque ces deux configurations sont identiques, et un "0" lorsqu'elles sont différentes. Le compteur 37 est donc remis à zéro lorsque ces deux configurations sont différentes.

Toutefois, grâce à la présence du circuit OU 33, on évite la remise à zéro intempestive du compteur 37. En effet, lorsqu'au cours de l'arrivée des échantillons successifs d'un même symbole, supposé différent du précédent, la sortie de l'un des dispositifs détecteurs de probabilité de présence produit un "1" qui y subsiste pendant l'arrivée d'un ou de plusieurs échantillons, puis repasse à "0", sans pour autant que la sortie d'un autre dispositif détecteur passe à "1" pendant un certain temps, on peut considérer avec une forte probabilité d'exactitude que le symbole, dont les premiers échantillons ont fait passer à "1" ladite sortie de l'un des dispositifs détecteurs, a bien le saut de phase correspondant. D'autre part, le registre 31 a mémorisé une configuration comportant un "1" pour le symbole précédent, et dès que le "1' se présente sur la sortie du dispositif détecteur en question pour le symbole en cours de réception, le comparateur 36 remet le compteur 37 à zéro, mais la configuration ne comportant que des "0", due au fait que la sortie du dispositif détecteur en question repasse à "0", bien qu'étant différente de la configuration mémorisée dans le registre 31, ne peut parvenir au comparateur 36, car un "0" est présent à la sortie du OU 33 et bloque les portes 34 et 35.

Dès qu'un "0" se présente à la sortie du comparateur 36, il remet à zéro le compteur 37 ainsi que précisé ci-dessus, et il est transformé en un "1" par l'inverseur 38. Le passage à "1" à la sortie de 38, appliqué à l'entrée CK de la bascule 39 fait transférer dans la bascule 39, l'information décodée par le transcodeur 42, c'est-à-dire de "dibit" correspondant au saut de phase ayant été détecté par le dispositif de détection de probabilité de présence selon le processus qui vient d'être décrit. En outre, pour chaque nouvel échantillon incident, dès que le dispositif 5 a déterminé qu'il s'agit d'un échantillon appartenant au même symbole que l'échantillon précédent soit parce qu'un "1" subsiste à la sortie du dispositif détecteur correspondant, soit parce qu'il n'apparaît pas de "1" sur les sorties des autres dispositifs détecteurs, le compteur 37 s'incrémente d'une unité. Le décodeur d'états 40 émet à sa sortie un "1" dès que le compteur 37 arrive à un état déterminé, avantageusement égal à environ la moitié du nombre d'échantillons d'un symbole, dix dans le cas présent. Le passage à "1" de la sortie du décodeur 40 fait transférer sur les sorties $S_1$ et $S_2$ de la bascule 41 le "debit" qui avait été mémorisé dans 39 sous la commande du "0" émis par le comparateur 36 de la façon expliquée ci-dessus. Ainsi, dès l'arrivée du dix-septième échantillon d'un symbole (remise à zéro du compteur 37 possible à partir du septième échantillon, et transfert vers les sorties de la bascule 41 dix échantillons plus tard) on peut disposer sur les sorties $S_1$ et $S_2$ du "dibit" avec un taux de certitude élevé.

**Revendications**

1. Procédé de démodulation pour signaux modulés en sauts de phase, en particulier pour le traitement en temps partagé sur plusieurs canaux de transmission, ces signaux étant échantillonnés et codés (2) à la réception, caractérisé par le fait que l'on interpole (3) les signaux échantillonés et codés de façon à obtenir pour chaque symbole d'information un nombre entier $n$ d'échantillons, que l'on calcule (4), par rapport à un signal de référence à phase fixe (20, 21), l'écart de phase de chaque échantillon obtenu après interpolation, que l'on compare (22, 23) l'écart de phase ainsi calculé de chaque échantillon à l'écart de phase calculé de la même façon pour l'échantillon antérieur de $n$ unités à l'échantillon considéré, que l'on transcode (42) en "dibits" ou en "tribits" le résultat de la comparaison en assimilant (26) à une même valeur de saut de phase des résultats de comparaison différents mais se situant tous à l'intérieur d'une même fourchette de valeurs, les différentes fourchettes de valeurs pouvant être jointives ou non, que l'on déclenche un compteur (37) dès le franchissement d'un seuil (27—30) par les résultats de la comparaison, ce seuil correspondant à un nombre déterminé d'échantillons pris dans une série d'échantillons successifs et appartenant tous à la même fourchette de valeurs, et que l'on valide (41) le résultat du transcodage dès que le compteur atteint un état déterminé (40).

2. Procédé selon la revendication 1, caractérisé par le fait que l'on remet à zéro le compteur (37) chaque fois que le fonctionnement d'un seuil a été déterminé (36) pour une fourchette de valeurs différente de celle pour laquelle le comptage est en cours.

3. Procédé selon l'une quelconque des revendications 2 ou 3, caractérisé par le fait que l'on interpole le signal reçu échantillonné et codé de façon que la nouvelle fréquence d'échantillonnage résultant de l'interpolation soit le plus petit commun multiple de la fréquence d'échantillonnage avant interpolation et de la fréquence de modulation à l'émission.

4. Procédé selon l'une quelconque des revendications 1 ou 2, caractérisé par le fait que l'on interpole le signal reçu échantilloné et codé de façon que la nouvelle fréquence d'échantillonnage résultant de l'interpolation soit un multiple entier, avantageusement le triple, de la fréquence d'échantillonnage avant interpolation, cette dernière étant un multiple entier de la fréquence de modulation.

5. Procédé selon l'une quelconque des revendications précédentes, caractérisé par le fait qu'on génère ledit signal de référence en produisant directement sous forme numérique des valeurs de phase de référence à une fréquence égale à celle de la porteuse des informations transmises.

6. Dispositif démodulateur pour la mise en oeuvre du procédé selon l'une quelconque des revendications 1 à 5 et prévu pour fonctionner en temps partagé sur plusieurs canaux, et comportant un multiplexeur (1) approprié suivi d'un échantillonneur codeur (2) habituel, caractérisé par le fait qu'il comporte à la sortie de l'échantillonneur-codeur (2) un interpolateur (3) suivi d'un calculateur (4) de sauts de phase et d'un dispositif (5) de décision statistique.

7. Dispositif selon la revendication 6, caractérisé par le fait que le calculateur (4) de sauts de phase comporte un circuit de calcul à réseau numérique non récursif (8) et à diviseur (15), ce circuit de calcul (0, 15) étant relié à une première mémoire morte (16) de transcodage dont la sortie est reliée à une première entrée (+) d'un premier dispositif additionneur (19) dont la seconde entrée (—) est reliée à la sortie d'une seconde mémoire morte (21) commandée par un compteur d'adressage (20) et dans laquelle ont été mémorisés des échantillons de phase de référence à la fréquence de la porteuse des signaux analogiques incidents, la sortie de ce premier dispositif additionneur (19) étant reliée à la fois à une première entrée (+) d'un second dispositif additionneur (22) et à une ligne à retard numérique (23) comportant un nombre d'éléments égal au nombre d'échantillons d'un symbole, la sortie de cette ligne à retard étant reliée à la seconde entrée (—) du second additionneur (22).

8. Dispositif selon l'une quelconque des revendications 6 ou 7, caractérisé par le fait que le dispositif de décision statistique comporte une mémoire morte de décodage (26) sur chacune des différentes sorties de laquelle apparaît un "1" lorsque la phase déterminée par le calculateur (4) se trouve dans la fourchette d'écarts de phase correspondante, chacune de ces sorties étant reliée d'une part à une mémoire morte (42) de transcodage en "dibits" ou en "tribits", et d'autre part à une ligne à retard numérique (27d—30d) comportant un nombre d'éléments supérieur, de préférence de deux à trois unités, à la valeur dudit seuil, les différentes sorties des éléments de cette ligne à retard (27d—30d) étant reliées aux différentes entrées d'une mémoire morte de probabilité de présence (27b—30b) réalisée de façon à produire un "1" à sa sortie lorsque le nombre des éléments de la ligne à retard numérique (27a—30a) correspondante comportant des "1" est au moins égal audit seuil, les sorties des différentes mémoires (27b—30b) étant à chaque fois reliées d'une part à une première série d'entrées correspondantes d'un comparateur (36) via un premier registre (31) à bascules bistables, et d'autre part à une deuxième série d'entrées de ce comparateur (36) via un second registre (32) à bascules bistables, la sortie de ce comparateur (36) étant reliée d'une part, via un inverseur logique (38), à l'entrée de signaux d'horloge d'une première bascule bistable (39) qui est reliée à la sortie de ladite mémoire morte de transcodage (42), et d'autre part à l'entrée de remise à zéro du compteur (37) dont les différentes sorties sont reliées à un décodeur (40), la sortie de ce décodeur étant reliée à l'entrée de signaux d'horloge d'une seconde bascule bistable (41) branchée à la sortie de la première bascule bistable (39), les sorties de cette seconde bascule bistable constituant les sorties (S₁, S₂) du démodulateur.

## Claims

1. A method for demodulating phase jump modulated signals, in particular in view of the time multiplexed processing of several transmission channels, these signals being sampled and coded (2) at the reception side, characterized in that the sampled and coded signals are interpolated (3) in such a way that an integer number n of samples is obtained for each information symbol, that the phase difference of each sample obtained after interpolation is computed (4) with respect to a reference signal of a fixed phase (20, 21), that the computed phase difference of each sample is compared (22, 23) to the phase difference computed in the same manner for a sample which is by n units earlier than the considered sample, that the comparison result is trans- coded (42) into "dibits" or into "tribits" by attributing a common value of phase jump to the different comparison results which are situated inside a common range of values, the different ranges of values being adjacent or not adjacent, that a counter (37) is started as soon as the comparison results exceed a limit (27—30) which corresponds to a predetermined number of samples taken from a series of successive samples and appertaining all to the same range of values, and that the result of the transcoding operation is validated (41) as soon as the counter has reached a predetermined state (40).

2. A method according to claim 1, characterized in that the counter (37) is returned to zero as often as the operation of a limit has been determined (36) for a different range of values with respect to that for which the counting is on hand.

3. A method according to any one of claims 2 or 3, characterized in that the signal is interpolated which is received after sampling and coding, in such a way, that the new sampling frequency resulting from the interpolation is the smallest common multiple of the sampling frequency prior to interpolation and of the modulation frequency during emission.

4. A method according to any one of claims 1 or 2, characterized in that the signal which has been received after sampling and coding is interpolated in such a way that the new sampling frequency resulting from the interpolation is constituted by a multiple integer, preferably the triple, of the sampling frequency prior to interpolation, this latter frequency being a multiple integer of the modulation frequency.

5. A method according to any one of the preceding claims, characterized in that said reference signal is generated by producing directly in digital form the values of the reference phase at a frequency which is equal to the carrier frequency of the transmitted informations.

6. A demodulator device for realizing the method according to any one of claims 1 to 5, and provided to operate at a time multiplex mode on several channels, and comprising an appropriate multiplexer (1) followed by a usual sampler-coder (2), characterized in that it comprises, at the output of the sampler-coder (2), an interpolator (3) followed by a computer (4) for computing the phase jumps, and by a statistical decision device (5).

7. A device according to claim 6, characterized in that the computer (4) for computing the phase jumps comprises a calculator circuit having a digital non recursive network (8), and a divider (15), the calculator circuit (8, 15) being connected to a first ROM memory (16) for transcoding, the output of which is connected to a first input (+) of a first adding device (19), the second input of this device being connected to the output of a second ROM memory (21) which is controlled by an address counter (20) and in which samples of the reference phase have been stored at the carrier frequency of the incident analog signals, the output of said first adding device (19) being connected as well to a first input (+) of a second adding device (22) as to a digital delay line (23) comprising a number of elements which is equal to the number of samples of a symbol, the output of said delay line being connected to the second input (–) of the second adder (22).

8. A device according to any one of claims 6 or 7, characterized in that the statistical decision device comprises a ROM memory for decoding (26) and that a signal "1" is present at each of the different outputs of this memory, if the phase determined by the computer (14) is situated in the corresponding range of phase differences, each of these outputs being connected on the ond hand to a ROM memory (42) for transcoding into "dibits" or "tribits" and on the other hand to a digital delay line (27d—30d) comprising a number of elements which is larger, preferably by two or three units, than the value of said limit, the different outputs of the elements of this delay line (27d—30d) being connected to the different inputs of a ROM memory for the probability of presence (27b—30b) which is realized in such a way that it produces a "1" signal at the output, if the number of elements of the corresponding digital delay line (27d—30d) showing "1" signals is at least equal to said limit, the outputs of the different memories (27b—30b) being each time connected on the one hand to a first series of corresponding inputs of a comparator (36) via a first register (31) being constituted of bistable flip flops, and on the other hand to a second series of inputs of said comparator (36) via a second register (32) constituted by bistable flip flops, the output of said comparator (36) being connected on the one hand via a logic inverter (38) to the input for clock signals of a first bistable flip flop (39) which is connected to the output of said ROM memory for decoding (32), and on the other hand to the return to zero input of the counter (37), the different ouputs of which are connected to a decoder (40), the output of said decoder being connected to the clock signal input of a second bistable flip flop (41) which is connected to the output of the first bistable flip flop (39), the outputs of said second bistable flip flop constituting the outputs $(S_1, S_2)$ of the demodulator.

**Patentansprüche**

1. Verfahren zur Demodulation von phasensprungmodulierten Signalen, insbesondere für die Behandlung mehrerer Übertragungskanäle in Zeitmultiplex, wobei diese Signale beim Empfang getastet und kodiert (2) werden, dadurch gekennzeichnet, daß die getasteten und kodierten Signale interpoliert (3) werden derart, daß man für jedes Informationssymbol eine ganze Zahl n von Abtastproben erhält, daß der Phasenabstand jeder Tastprobe nach ihrer Interpolation bezüglich eines Bezugssignals fester Phase (20, 21) berechnet wird (4), daß der berechnete Phasenabstand jeder Tastprobe mit dem in gleicher Weise berechneten Phasenabstand für die um n Einheiten vor der betrachteten Tastprobe liegende Tastprobe verglichen wird (22, 23), daß das Vergleichsergebnis in Zweibit- oder Dreibitwörter transkodiert wird (42), indem unterschiedliche, aber innerhalb eines gemeinsamen Wertebereichs liegende Vergleichsergebnisse einem gemeinsamen Phasensprungwert zugeordnet werden (26), wobei die verschiedenen Bereiche aneinander anschließen oder nicht, daß ein Zähler (37) ausgelöst wird, sobald die Vergleichsergebnisse eine Schwelle (27—30) überschreiten, die einer bestimmten Zahl von Tastproben in einer Reihe aufeinanderfolgender und einem gemeinsamen Wertbereich zugehörender Tastproben entspricht, und daß das Ergebnis der Transkodierung ausgegeben wird (41), sobald der Zähler einen bestimmten Zählstand (40) erreicht.

2. Verfahren nach Anspruch 1, dadurch gekennzeichnet, daß der Zähler (37) jedesmal auf Null gesetzt wird, wenn der Betrieb einer Schwelle bestimmt worden ist (36) für einen Wertebereich, der sich von dem unterscheidet, für den die Zählung gerade erfolgt.

3. Verfahren nach einem beliebigen der Ansprüche 2 oder 3, dadurch gekennzeichnet, daß das getastet und kodiert empfangene Signal interpoliert wird derart, daß die neue aus der Interpolation resultierende Tastfrequenz das kleinste gemeinsame Vielfache der Tastfrequenz vor der Interpolation und der Modulationsfrequenz auf der Sendeseite ist.

4. Verfahren nach einem beliebigen der Ansprüche 1 oder 2, dadurch gekennzeichnet, daß das getastet und kodiert empfangene Signal interpoliert wird derart, daß die neue, aus der Interpolation resultierende Tastfrequenz ein ganzzahliges Vielfaches, vorzugsweise das Dreifache, der Tastfrequenz vor der Interpolation ist, wobei die letztere ein ganzzahliges Vielfaches der Modulationsfrequenz ist.

5. Verfahren nach einem beliebigen der vorhergehenden Ansprüche, dadurch gekennzeichnet, daß das Bezugssignal gebildet wird, indem direkt in digitaler Form Bezugsphasenwerte mit einer Frequenz erzeugt werden, die der Trägerfrequenz der übertragenen Informationen gleicht.

6. Demodulatorvorrichtung für die Anwendung des Verfahrens nach einem beliebigen der Ansprüche 1 bis 5 zur Verwendung im Zeitmultiplexbetrieb für mehrere Kanäle, wobei die Vorrichtung einen geeigneten Multiplexer (1) aufweist, der von einem Tast- und Kodierkreis (2) üblicher Bauart gefolgt ist, dadurch gekennzeichnet, daß die Vorrichtung am Ausgang des Tast- und Kodierkreises (2) einen Interpolierer (3) aufweist, der von einem Phasensprungrechner (4) und einer vorrichtung (5) zur statistischen Entscheidung gefolgt ist.

7. Vorrichtung nach Anspruch 6, dadurch gekennzeichnet, daß der Phasensprungrechner (4) einen Rechenschaltkreis mit einem nicht rekursiven digitalen Netz (8) und einem Teiler (15) aufweist, wobei dieser Rechenschaltkreis (8, 15) an einen ersten Festspeicher (16) zur Transkodierung angeschlossen ist, dessen Ausgang an einen ersten Eingang (+) einer ersten Addiervorrichtung (19) angeschlossen ist, wobei der zweite Eingang (—) dieser Vorrichtung an den Ausgang eines zweiten Festspeichers (21) angeschlossen ist, der von einem Adressierzähler (20) gesteuert wird, wobei in diesem Speicher die Tastproben der Bezugsphase bei der Trägerfrequenz der ankommenden analogen Signale eingespeichert worden sind, wobei der Ausgang dieser ersten Addiervorrichtung (19) sowohl an einen ersten Eingang (+) einer zweiten Addiervorrichtung (22) als auch an eine digitale Verzögerungsleitung (23) angeschlossen ist, die Elemente einer solchen Anzahl aufweist, die der Anzahl von Tastproben eines Symbols entspricht, und wobei der Ausgang dieser Verzögerungsleitung an den zweiten Eingang (—) des zweiten Addierers (22) angeschlossen ist.

8. Vorrichtung nach einem beliebigen der Ansprüche 6 oder 7, dadurch gekennzeichnet, daß die Vorrichtung zur statistischen Entscheidung einen Dekodier-Festspeicher (26) aufweist, an dessen verschiedenen Ausgängen eine "1" erscheint, wenn die vom Rechner (4) bestimmte Phase im entsprechenden Bereich der Phasendifferenzen liegt, wobei jeder der Ausgänge einerseits mit einem Festspeicher (42) zur Transkodierung in Zweibitwörter oder in Dreibitwörter verbunden ist und andererseits mit einer digitalen Verzögerungsleitung (27d—30d) die Elemente in einer Anzahl aufweist, die größer, vorzugsweise zwei oder drei Einheiten größer, als der Wert dieser Schwelle ist, wobei die verschiedenen Ausgänge der Elemente dieser Verzögerungsleitung (27d—30d) mit den verschiedenen Eingängen eines Festspeichers (27b—30b) für die Wahrscheinlichkeit der Präsenz verbunden sind, der eine "1" an seinem Ausgang erzeugt, wenn die Anzahl von Elementen der entsprechenden digitalen Verzögerungsleitung (27d—30d), die den Wert "1" anzeigen, mindestens gleich dieser Schwelle ist, wobei die Ausgänge der verschiedenen Speicher (27b—30b) jedesmal einerseits an eine erste Serie entsprechender Eingänge eines Komparators (36) über ein erstes aus bistabilen Kippstufen bestehendes Register (31) und andererseits an eine zweite Serie von Eingängen dieses Komparators (36) über ein zweites aus bistabilen Kippstufen bestehendes Register (32) angeschlossen sind und der Ausgang dieses Komparators (36) einerseits über einen logischen Inverter (38) an den Eingang für Taktsignale einer ersten bistabilen Kippstufe (39) angeschlossen ist, die mit dem Ausgang des Transkodier-Festspeichers (42) verbunden ist, und andererseits an den Nullsetzungseingang des Zählers (37), dessen verschiedene Ausgänge mit einem Dekodierer (40) verbunden sind, wobei der Ausgang dieses Dekodierers mit dem Taktsignaleingang einer zweiten bistabilen Kippstufe (41) verbunden ist, die an den Ausgang der ersten bistabilen Kippstufe (39) angeschlossen ist, und wobei die Ausgänge dieser zweiten bistabilen Kippstufe die Ausgänge ($S_1$, $S_2$) des Demodulators bilden.

0 018 242

Fig.1

Fig.2

Fig. 3